# EUROPÄISCHE PATENTSCHRIFT

(11) **EP 0 618 650 B1**
(45) Veröffentlichungstag und Bekanntmachung des Hinweises auf die Patenterteilung: **18.09.1996**
(21) Anmeldenummer: 94104467.9
(22) Anmeldetag: 22.03.1994
(51) Int. Cl.: H01S 3/06, H04B 10/16

(54) **Faseroptischer Verstärker mit einer Vorrichtung zur Überwachung der Eingangsleistung**
Fiber optic amplifier with device for monitoring the input power
Amplificateur à fibres optiques avec dispositif de contrôle de la puissance d'entrée

(30) Priorität: 30.03.1993 DE 4310292
(43) Veröffentlichungstag der Anmeldung: 05.10.1994
(73) Patentinhaber: Alcatel SEL Aktiengesellschaft, D-70435 Stuttgart (DE)
(72) Erfinder: Heidemann, Rolf, Dr., D-71732 Tamm (DE); Junginger, Bernhard, D-71083 Herrenberg (DE)
(74) Vertreter: Kugler, Hermann, Dipl.-Phys.

(56) Entgegenhaltungen:
- EP-A- 0 449 475
- EP-A- 0 507 367
- GB-A- 2 245 757

## Beschreibung

Die Erfindung betrifft einen faseroptischen Verstärker nach dem Oberbegriff des Anspruchs 1.

Ein faseroptischer Verstärker der genannten Art ist z. B. aus GB-A-2 245 757 bekannt. Dort ist ein faseroptischer Verstärker gezeigt, der zwei Pumplichtquellen, einen Pumplichtkoppler, ein mit Seltenerd-Ionen dotiertes Lichtwellenleiterstück, einen Koppler am Ausgang und eine Vergleichs- und Steuereinrichtung hat. Dem mit Seltenerd-Ionen dotierten Lichtwellenleiterstück wird Pumplicht in Ausbreitungsrichtung des zu verstärkenden optischen Signals zugeführt. Durch den Koppler am Ausgang wird Pumplicht oder ein Teil des optischen Signals ausgekoppelt und einem Photodetektor zugeführt. Bei diesem faseroptischen Verstärker soll die Lebensdauer der Pumplichtquellen verlängert werden. Um das zu erreichen, wird die Ausgangslichtleistung der Pumplichtquellen so gesteuert, daß die Ausgangslichtleistung des faseroptischen Verstärkers konstant ist. Das durch den Koppler ausgekoppelte Pumplicht dient demnach ausschließlich dazu, die Pumplichtquellen zu steuern.

Aus Clesca, B. et al, "32 channel, 48 dB CNR and 46 dB budget AM-VSB transmission experiment with field-ready post amplifiers", Optical Amplifiers and Their Applications Technical Digest 1992 (Optical Society of America, Washington, D.C., 1992), Vol. 17, Seiten 91 bis 94 ist ein weiterer faseroptischer Verstärker bekannt. Dort ist ein faseroptischer Verstärker gezeigt, der zwei Pumplichtquellen, die Pumplicht mit einer Wellenlänge von 1480 nm emittieren, zwei Pumplichtkoppler und ein Lichtwellenleiterstück, das mit Erbium-Ionen dotiert ist, hat.

In Übertragungssystemen mit faseroptischen Verstärkern besteht u.a. die Forderung, daß die Übertragungsstrecke augensicher ist, d.h. daß zu keinem Zeitpunkt das Auge einer Person, die absichtlich oder unabsichtlich in einen unterbrochenen Lichtwellenleiter schaut, gefährdet sein darf. Um das zu gewährleisten, muß das System oder einzelne Systembestandteile im Falle eines Faserbruchs abgeschaltet werden.

Eine Unterbrechung der Übertragungsstrecke kann z.B. dadurch festgestellt werden, indem die Eingangslichtleistung eines faseroptischen Verstärkers überwacht wird. Eine fehlende Eingangslichtleistung kann bedeuten, daß die Übertragungsstrecke vor diesem faseroptischen Verstärker unterbrochen ist.

Aus Clesca et al ist bekannt, die Eingangslichtleistung eines faseroptischen Verstärkers zu überwachen. Dort wird ein Teil der Eingangslichtleistung durch einen Koppler, der Bestandteil des faseroptischen Verstärkers ist, ausgekoppelt und von einer Photodiode detektiert. Dadurch, daß dem verstärkenden Teil des faseroptischen Verstärkers weniger Lichtleistung zur Verfügung steht und daß durch das Einfügen des Kopplers eine zusätzliche Dämpfung verursacht wird, verschlechtert sich das Signal-Rausch Verhältnis. Außerdem entsteht durch diesen Koppler ein zusätzlicher Aufwand an Material und Arbeitszeit.

Eine Aufgabe der Erfindung ist, einen faseroptischen Verstärker anzugeben, bei dem die Eingangslichtleistung, ohne die genannten Nachteile, überwacht wird. Diese Aufgabe wird mit den im Anspruch 1 genannten Merkmalen gelöst. Vorteilhafte Ausführungen der Erfindung sind in den Unteransprüchen angegeben.

Die Erfindung wird nun anhand der Zeichnungen näher erläutert. Es zeigen:
- Fig. 1: ein Ausführungsbeispiel eines faseroptischen Verstärkers, bei dem das Pumplicht und das optische Signal die gleiche Ausbreitungsrichtung haben,
- Fig. 2: ein Ausführungsbeispiel einer Vorrichtung, die Pumplicht auskoppelt,
- Fig. 3: ein Ausführungsbeispiel eines faseroptischen Verstärkers, bei dem das Pumplicht und das optische Signal entgegengesetzte Ausbreitungsrichtung haben.

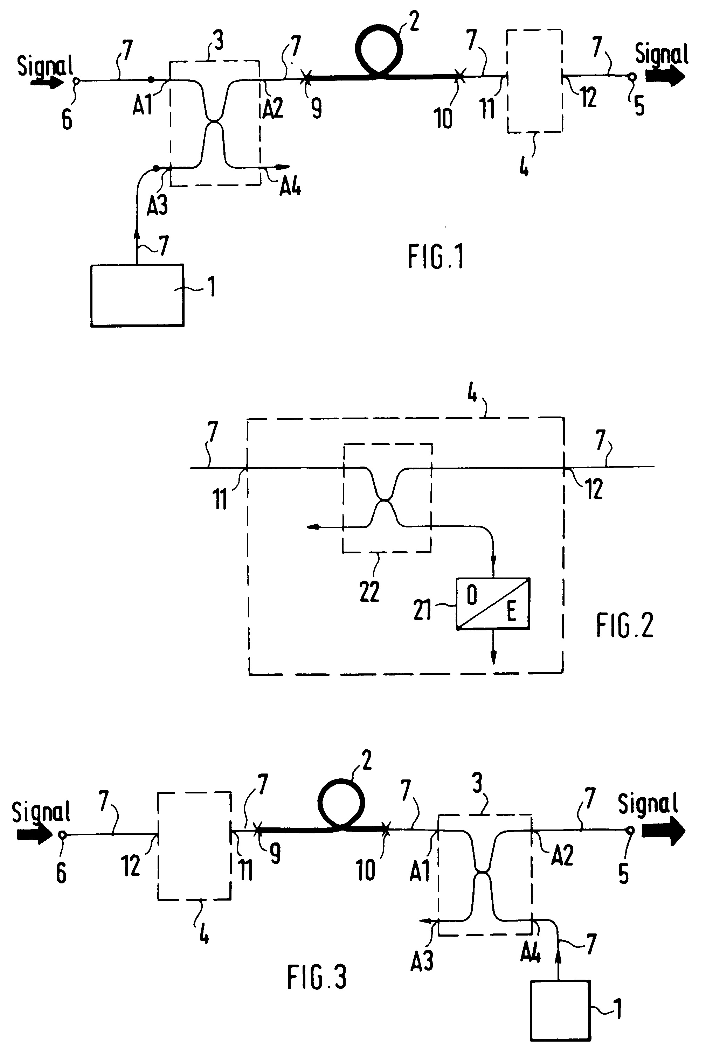

In Fig. 1 ist ein faseroptischer Verstärker in seinem für die Erfindung relevanten prinzipiellen Aufbau gezeigt. Eventuell vorhandene optische Isolatoren und Stromversorgungen sind nicht gezeigt. Ein zu verstärkendes optisches Signal tritt an einem Eingang 6 in den faseroptischen Verstärker ein und verläßt diesen verstärkt an einem Ausgang 5. Die Verstärkung ist durch unterschiedlich große Pfeile an Ein- und Ausgang des faseroptischen Verstärkers angedeutet.

Er hat eine ein Pumplicht emittierende Pumplichtquelle 1, ein mit einem Seltenerd-Element, z.B. Erbium, dotiertes Lichtwellenleiterstück 2, das ein erstes Ende 9 und ein zweites Ende 10 hat, und einen wellenlängenselektiven Pumplichtkoppler 3, der vier Anschlüsse A1 bis A4 hat. Derartige Koppler sind z.B. beschrieben in: Grau, G., "Optische Nachrichtentechnik", zweite Auflage, Berlin, Heidelberg, New York, Tokyo, Springer Verlag, 1986, Seiten 296 bis 302. Außerdem hat er eine Vorrichtung 4, durch die das nach dem Lichtwellenleiterstück 2 noch vorhandene Pumplicht ausgekoppelt und ausgewertet wird. Die Vorrichtung 4 hat einen Anschluß 11 und einen Anschluß 12.

Der erste Anschluß A1 des Pumplichtkopplers 3 ist mit dem Eingang 6, der zweite Anschluß A2 mit dem ersten Ende 9 des Lichtwellenleiterstücks 2 und der dritte Anschluß A3 mit der Pumplichtquelle 1 verbunden. Das zweite Ende 10 des Lichtwellenleiterstücks 2 ist über einen Lichtwellenleiter 7 mit dem Anschluß 11 der Vorrichtung 4 verbunden und deren Anschluß 12 mit dem Ausgang 5 des faseroptischen Verstärkers. Die Verbindung der einzelnen Bestandteile erfolgt entweder direkt oder über Lichtwellenleiter 7, die gleiche Bezugszeichen haben, d.h. daß die Verbindung zwischen dem Ende 10 des Lichtwellenleiterstücks 2 und dem Anschluß 11 der Vorrichtung 4 auch direkt erfolgen kann. Das Pumplicht wird dem Lichtwellenleiterstück 2 in Ausbreitungsrichtung des optischen Signals zugeführt.

Die Vorrichtung 4 nutzt die Tatsache aus, daß die Absorption des dem Lichtwellenleiterstück 2 zugeführten Pumplichts proportional der Anzahl der Erbium-Ionen ist, die sich im energetischen Grundzustand befinden. Durch das Pumplicht werden die Erbium-Ionen von dem Grundzustand in einen angeregten Zustand überführt, von dem aus sie, entweder durch spontane oder stimulierte Emission, wieder in den Grundzustand übergehen. Die stimulierte Emission wird durch das durch das Lichtwellenleiterstück 2 laufende zu verstärkende optische Signal angeregt.

Ist das optische Signal groß, wird ein Großteil der angeregten Erbium-Ionen zur stimulierten Emission angeregt; es sind mehr Erbium-Ionen im Grundzustand, als wenn kein oder wenig Signal zugeführt wird. In diesem Fall ist die Absorption des Pumplichts groß und am Ende des Lichtwellenleiterstücks tritt wenig nicht absorbiertes Pumplicht aus.

Ist das optische Signal klein oder fehlt es ganz, befinden sich mehr Erbium-Ionen im angeregten Zustand als im Grundzustand. In diesem Fall ist die Absorption des Pumplichts klein und am Ende des Lichtwellenleiterstücks tritt vermehrt nicht absorbiertes Pumplicht aus.

Das nicht absorbierte Pumplicht wird durch die Vorrichtung 4 detektiert und ausgewertet, so daß festgestellt werden kann, ob am Eingang 6 eine Eingangslichtleistung vorhanden ist oder nicht. Dies geschieht z.B. dadurch, daß für das detektierte Pumplicht ein Schwellenwert festgelegt wird.

Liegt die Intensität des detektierten Pumplichts oberhalb des Schwellenwerts, bedeutet dies, daß zu wenig Pumplicht absorbiert wird und daß das optische Signal zu klein ist oder ganz fehlt.

In diesem Fall, wenn die Intensität des noch vorhandenen Pumplichts einen Schwellenwert überschreitet, kann der faseroptische Verstärker oder das ganze System abgeschalten werden. Die Forderung nach Augensicherheit kann somit erfüllt werden.

Liegt die Intensität des detektierten Pumplichts unterhalb des Schwellenwerts, bedeutet dies, daß genügend optisches Signal vorhanden ist.

Voraussetzung dafür ist, daß das Pumplicht aus dem Lichtwellenleiter 7 ausgekoppelt wird und auf einen Detektor trifft, der für die Wellenlänge des verwendeten Pumplichts empfindlich ist. Dies kann z.B. durch die in Fig. 2 gezeigten Ausführungsbeispiele der Vorrichtung 4 erreicht werden.

In Fig. 2 ist in den Lichtwellenleiter 7, der mit dem zweiten Ende 10 des Lichtwellenleiterstücks 2 verbunden ist, ein wellenlängenselektiver Koppler 22 der bereits genannten Art (Grau, G. "Optische Nachrichtentechnik") eingefügt. Das von ihm aus dem Lichtwellenleiter 7 ausgekoppelte nicht absorbierte Pumplicht wird einem Optisch-Elektrisch Wandler 21, der eine Photodiode enthält, zugeführt. Diesem folgt eine nicht gezeigte Verarbeitungseinheit, die das dem Pumplicht entsprechende elektrische Signal auswertet. Diese kann z.B. eine Speichereinheit haben, in der der Schwellenwert für die Eingangslichtleistung gespeichert ist.

Das in Fig. 3 gezeigte Ausführungsbeispiel hat die gleichen Bestandteile und Bezugszeichen, wie das in Fig. 1 gezeigte. Dadurch, daß hier das Pumplicht dem Lichtwellenleiterstück 2 entgegen der Ausbreitungsrichtung des optischen Signals zugeführt wird, ergibt sich die folgende Anordnung:

Zwischen dem Eingang 6 und dem ersten Ende 9 des Lichtwellenleiterstücks 2 ist die Vorrichtung 4 angeordnet. Der Eingang 6 ist hier über einen Lichtwellenleiter 7 mit dem Anschluß 12 der Vorrichtung 4 verbunden und deren Anschluß 11 ist, ebenfalls über einen Lichtwellenleiter 7, mit dem ersten Ende 9 des Lichtwellenleiterstücks 2 verbunden. Das zweite Ende 10 des Lichtwellenleiterstücks 2 ist über einen Lichtwellenleiter 7 mit dem ersten Anschluß A1 des Pumplichtkopplers 3 verbunden. Dessen zweiter Anschluß A2 ist mit dem Ausgang 5, und dessen vierter Anschluß A4 ist mit der Pumplichtquelle 1 verbunden. Die gezeigten Lichtwellenleiter 7 können auch entfallen.

Das in Fig. 2 gezeigte Ausführungsbeispiel ist, passend zu Fig. 1, für den Fall gezeichnet, daß sich das Pumplicht in Ausbreitungsrichtung des optischen Signals ausbreitet. Für den in Fig. 3 gezeigten Fall, daß sich das Pumplicht entgegen der Ausbreitungsrichtung des optischen Signals ausbreitet, sind die Figuren sinngemäß zu ändern.

Die in den Figuren 1 und 3 gezeigten Ausführungsbeispiele stellen eine Minimalkonfiguration dar. Dem Lichtwellenleiterstück 2 kann auch gleichzeitig Pumplicht von zwei Pumplichtquellen zugeführt werden. In diesem Fall ist das Lichtwellenleiterstück 2 zwischen einem ersten und zweiten Pumplichtkoppler angeordnet. Auch bei dieser Anordnung ist der Grundgedanke der Erfindung anwendbar.

## Patentansprüche

1. Faseroptischer Verstärker zur Verstärkung eines optischen Signals, mit einem Lichtwellenleiterstück (2), das mit einem Seltenerd-Element dotiert ist und ein erstes (9) und zweites Ende (10) hat, mit mindestens einem Pumplichtkoppler (3), der ein von mindestens einer Pumplichtquelle (1) emittiertes Pumplicht in das Lichtwellenleiterstück (2) einkoppelt, und mit mindestens einer Vorrichtung (4), die das, bezogen auf die Ausbreitungsrichtung des Pumplichts, nach dem Lichtwellenleiterstück (2) noch vorhandene Pumplicht ganz oder teilweise auskoppelt,
**dadurch gekennzeichnet**, daß mit der
Vorrichtung (4) Verarbeitungsmittel verbunden sind, die den faseroptischen Verstärker abschalten, wenn das noch vorhandene Pumplicht einen Schwellenwert überschreitet.

2. Faseroptischer Verstärker nach Anspruch 1,
dadurch gekennzeichnet, daß die Vorrichtung (4) und der
Pumplichtkoppler (3) so mit dem Lichtwellenleiterstück verbunden sind, daß das Lichtwellenleiterstück (2) zwischen der Vorrichtung (4) und dem Pumplichtkoppler (3) angeordnet ist.

3. Faseroptischer Verstärker nach Anspruch 2,
dadurch gekennzeichnet, daß die Vorrichtung (4), bezogen auf die Ausbreitungsrichtung des optischen Signals, vor dem Lichtwellenleiterstück (2) angeordnet ist.

## Claims

1. A fiber-optic amplifier for amplifying an optical signal, comprising a section of optical fiber (2) doped with a rare-earth element and having a first end(9) and a second end (10), at least one pump-light coupler (3) which couples pump light emitted by at least one pump-light source (1) into the section of optical fiber (2), and at least one device (4) which couples out all or part of the pump light still present beyond the section of optical fiber (2) as viewed in the propagation direction of the pump light, **characterized in** that the device (4) has processing means connected thereto which turn the fiber-optic amplifier off when the pump light still present exceeds a threshold.

2. A fiber-optic amplifier as claimed in claim 1, characterized in that the device (4) and the pump-light coupler (3) are so connected to the section of optical fiber (2) that the section of optical fiber (2) is disposed between the device (4) and the pump-light coupler (3).

3. A fiber-optic amplifier as claimed in claim 2, characterized in that the device (4), as viewed in the propagation direction of the optical signal, is located ahead of the section of optical fiber (2).

## Revendications

1. Amplificateur à fibres optiques pour l'amplification d'un signal optique, comportant un guide d'ondes lumineuses (2) doté d'un élément des terres rares et ayant une première (9) et une deuxième (10) extrémités, possédant au moins un coupleur de lumière de pompage (3) qui injecte une lumière de pompage émise par au moins une source de lumière de pompage (1) dans le guide d'ondes lumineuses (2) et possédant au moins un dispositif (4) qui extrait totalement ou partiellement la lumière de pompage encore disponible derrière le guide d'ondes lumineuses (2) par rapport au sens de diffusion de la lumière de pompage, caractérisé en ce que sont raccordés au dispositif (4) des moyens de traitement qui déconnectent l'amplificateur à fibres optiques lorsque la lumière de pompage encore disponible dépasse une valeur de seuil.

2. Amplificateur à fibres optiques selon la revendication 1, caractérisé en ce que le dispositif (4) et le coupleur de lumière de pompage (3) sont raccordés au guide d'ondes lumineuses de telle sorte que le guide d'ondes lumineuses (2) est disposé entre le dispositif (4) et le coupleur de lumière de pompage (3).

3. Amplificateur à fibres optiques selon la revendication 2, caractérisé en ce que, par rapport au sens de diffusion du signal optique, le dispositif (4) est disposé devant le guide d'ondes lumineuses (2).
